# EUROPÄISCHE PATENTANMELDUNG

(11) **EP 1 302 227 A1**
(43) Veröffentlichungstag der Anmeldung: **16.04.2003**
(21) Anmeldenummer: 01810992.6
(22) Anmeldetag: 11.10.2001
(51) Int. Cl.: B01D 29/35, B01D 29/52

(54) **Filtrationseinheit**

(71) Anmelder: Filtrox AG, 9000 St. Gallen (CH)
(72) Erfinder: Gans, Ulrich, 9214 Kradolf-Schönenberg (CH); Schiess, Valentin, 4055 Basel (CH)
(74) Vertreter: Hepp, Dieter

(57) **Zusammenfassung**

Filtrationseinheit (1) zur Crossflow-Filtration von Flüssigkeiten enthalten ein Filtergehäuse (2) zum Ableiten von Filtrat, welches Filtergehäuse (2) wenigstens zwei rohrförmige, keramische Filterelemente (4, 4') zur Durchleitung des Unfiltrats enthält, dadurch gekennzeichnet, dass die Filterelemente (4, 4') in wenigstens zwei Gruppen (5, 5') angeordnet sind, und dass die Filterelemente (4, 4') jeder Gruppe (5, 5') derart mit einer Anordnung (6) zum Leiten des Unfiltrats verbunden sind, dass das Unfiltrat in einer ersten Gruppe (5) von Filterelementen (4) in einer Strömungsrichtung und in der zweiten Gruppe (5') in der entgegengesetzten Richtung strömt. Ebenfalls beschrieben wird eine Vorrichtung und ein Verfahren zur Crossflow-Filtration unter Verwendung der erfindungsgemässen Filtrationseinheit (1).

## Beschreibung

Die Erfindung betrifft eine Methode zum Filtrieren von Flüssigkeiten, eine Filtrationseinheit und eine Vorrichtung zur Filtration von Flüssigkeiten, enthaltend eine erfindungsgemässe Filtrationseinheit mit den Merkmalen des Oberbegriffs der unabhängigen Patentansprüche.

Filtermodule mit keramischen Filterelementen sind bekannt und werden beispielsweise für die Filtration von trüben Flüssigkeiten im Bereich der Lebensmitteltechnologie bzw. im biotechnologischen Bereich routinemässig eingesetzt. Zur Erzielung von hohen Durchsatzraten wird dabei die Methode der Crossflow-Filtration angewendet. Hierbei wird Unfiltrat tangential zur Filtermembran geführt und ermöglicht eine gleichzeitige Entfernung der von der Membran zurückgehaltenen Bestandteile durch das im Kreislauf bewegte Unfiltrat.

Die Offenlegungsschrift DE 198 46 041 beschreibt ein Membranmodul, das eine Anzahl von stabförmigen, keramischen Filterelementen aufweist. Die Ränder der Stirnseiten dieser Filterelemente werden unter Verwendung von Dichtungsmitteln in entsprechende Öffnungen eines Deckels gefasst.

EP 208 450 beschreibt eine Filtrationsvorrichtung für die Bierfiltration, die auf die Crossflow-Filtrationsmethode zurückgreift. Die Filterelemente bestehen ebenfalls aus keramischen Material und weisen eine Mehrzahl an durchgehenden Kanälen auf, durch die das Unfiltrat geführt wird.

Die in den beiden Dokumenten beschriebenen Filtermodule weisen jedoch den Nachteil auf, dass die Filtermodule jeweils nur in einer Richtung vom Unfiltrat durchströmt werden. Bei der Verwendung von mehreren dieser Filtermodulen in einer Filtrationsvorrichtung kommt es daher zu einer komplexen Flüssigkeitsführung, die insbesondere im Fall eines notwendigen Wechsels eines Filtermoduls oder eines Filterelementes (Keramikstab) einen erhöhten Arbeitsaufwand mit sich bringt.

Die Aufgabe der vorliegenden Erfindung ist es, die Nachteile des Bekannten zu vermeiden, insbesondere eine Filtrationseinheit zu schaffen, das eine vereinfachte Handhabung bei gleichzeitiger Erhaltung einer hohen Durchflussrate erlaubt.

Die Erfindung löst diese Aufgabe entsprechend den Merkmalen des kennzeichnenden Teils der unabhängigen Ansprüche.

Die Filtrationseinheit zur Crossflow-Filtration von Flüssigkeiten enthält ein Filtergehäuse zum Ableiten des Filtrates. Dieses Filtergehäuse enthält weiterhin wenigstens zwei stabförmige, poröse keramische Filterelemente zur Durchleitung des Unfiltrats. Die Filterelemente weisen achsparallele Durchgangsbohrungen auf, deren Innenseiten mit einem Membranmaterial beschichtet sind. Diese Filterelemente zeichnen sich dadurch aus, dass sie in wenigstens zwei Gruppen angeordnet sind. Diese Gruppen werden mit einer Anordnung zum Leiten des Unfiltrats derart verbunden, dass das Unfiltrat in der ersten Gruppe von Filterelementen eine entgegengesetzte Strömungsrichtung wie in der zweiten Gruppe aufweist. Diese Führungsweise ermöglicht eine raumsparende Installation der Filtrationseinheit innerhalb einer Filtrationsvorrichtung.

In einer bevorzugten Ausführungsform wird das Unfiltrat auf einer Seite des Filtergehäuses zugeleitet und auf derselben Seite abgeleitet. Diese Art der Anordnung erlaubt ebenfalls eine einfache Handhabung im Hinblick auf einen Austausch des Filtergehäuses.

In einer weiteren Ausführungsform der Filtrationseinheit schliesst die Zuleitung die erste Gruppe der Filterelemente des Filtergehäuses an und eine Ableitung des Unfiltrats schliesst an die andere Gruppe der Filterelemente an. Diese Ausführung erlaubt eine direkte Verbindung des Filtergehäuses an die Zuleitung und Ableitung, ohne dass weitere Mittel zur Verknüpfung erforderlich sind.

Die Fliessrichtung des Unfiltrats der Zuleitung und der Ableitung ist nicht festgelegt. Das Unfiltrat kann ebenso über die Zuleitung aus den Filterelementen herausgeleitet werden, wie es über die Ableitung in die Filterelemente hineingeleitet werden kann. Ohne diese Notwendigkeit einer vordefinierten Fliessrichtung ist die Filtrationseinheit flexibel einsetzbar.

Eine besondere Ausführungsform der Filtrationseinheit zeichnet sich dadurch aus, dass die Zuleitung und die Ableitung des Unfiltrats gegeneinander abgedichtet an das Filtergehäuses des Filtermoduls angeflanscht sind. Die gegenseitige Abdichtung verhindert Kurzschlussströme des Unfiltrats und eine Reduzierung der Durchsatzmenge des Unfiltrats durch die Filterelemente.

Ebenfalls eine bevorzugte Ausführungsform der Filtrationseinheit weist eine unmittelbare, parallel nebeneinander liegende Anordnung von Filterelementen wenigstens einer Gruppe auf. Eine derartige Anordnung erlaubt eine vorteilhafte Ausgestaltung der Zuleitung und Ableitung.

In einer weiteren Ausführungsform der Filtrationseinheit enthält das Filtergehäuse eine geradzahlige Anzahl, die grösser ist als zwei, an Gruppen von keramischen Filterelementen.

In einer weiteren, besonders bevorzugten Ausführungsform enthält die Filtrationseinheit auf der der Zuleitung und der Ableitung des Unfiltrats gegenüberliegenden Seite des Filtergehäuses mindestens ein Mittel zur Umkehrung der Durchflussrichtung des Unfiltrats.

Eine bevorzugte Filtrationseinheit weist auf der Seite der Zuleitung und der Ableitung zusätzlich ein Mittel zur Umkehrung der Durchflussrichtung auf. Dieses Mittel erlaubt insbesondere bei dem Vorhandensein von mehr als 2 Gruppen von Filterelementen eine Umkehrung der Durchflussrichtung, so dass innerhalb der Filtrationseinheit jeweils zwei unabhängige Bereiche mit identischer Durchflussrichtung bestehen.

In ebenfalls bevorzugten Form der Filtrationseinheit sind das Mittel zur Umkehrung der Durchflussrichtung und/oder die Zuleitung und/oder die Ableitung des Unfiltrats fest mit dem Gehäuse verbunden. Die jeweilige feste Verbindung mittels Kleben, Schweissen, Verschrauben, Verpressen etc. ermöglicht dem Anwender eine einfachere Installation der Filtrationseinheit. Gleichzeitig wird eine ausreichende Dichtigkeit hergestellt.

Weiterhin bevorzugt weist die Filtrationseinheit mindestens eine Filtratauslassöffnung sowie je eine Entlüftungsöffnung für den Filtrat- und Unfiltratraum am Filtergehäuse auf.

Eine Vorrichtung zur Filtration von Flüssigkeiten enthält mindestens eine erfindungsgemässen Filtrationseinheit und weiterhin wenigstens eine Pumpe zum Pumpen des Unfiltrats durch die Filtrationseinheit. Der Einsatz mehrerer solcher Filtrationseinheiten innerhalb einer Vorrichtung eröffnet die Möglichkeit, gezielt eine Anpassung der Durchsatzmengen vornehmen zu können. Mittels einer Pumpe in einer solchen Vorrichtung kann ein annähernd konstanter Durchfluss an Unfiltrat durch die Filtrationseinheiten sichergestellt werden, ohne dass zu grosse Unterschiede der Fliessgeschwindigkeit innerhalb des Systems auftreten.

Ein Verfahren zur Filtration von Flüssigkeiten in einer Filtrationseinheit gemäss der Erfindung zeichnet sich durch die folgende Schritte aus:
a) Zuführung des Unfiltrats durch ein Zuleitungselement zu einem Filtermodul mit wenigstens zwei Filterelementen;
b) Durchführung des Unfiltrats durch mindestens eine Gruppe von Filterelementen;
c) Umkehrung der Fliessrichtung des Unfiltrats mit wenigstens einem Mittel zur Umkehrung der Fliessrichtung;
d) Durchführung des Unfiltrats durch die zweite Gruppe von Filterelementen, die nicht für Schritt b) eingesetzt werden, mit einer der Fliessrichtung des Schrittes b) entgegengesetzten Fliessrichtung; und
e) Ausleitung des nicht filtrierten Unfiltrats durch eine Ableitung mit einer von der Zuleitungsflüssigkeit getrennten Flüssigkeitsführung.

In einer weiteren Ausführungsform des Verfahrens wird das Unfiltrat nach dem Schritt d) wenigstens einer weiteren Schrittfolge c), d), c), d), durch wenigstens zwei weitere Gruppen von Filterelementen innerhalb der Filtrationseinheit unterworfen.

Eine bevorzugte Form des Verfahrens zeichnet sich durch eine serielle oder parallele Anordnung mehrerer Filtrationseinheiten aus.

Die Erfindung wird im folgenden an einem Ausführungsbeispiel und anhand der Zeichnungen näher erläutert. Es zeigen
- Fig. 1: einen Längsschnitt durch eine Filtrationseinheit;
- Fig. 2: einen Querschnitt einer Filtrationseinheit;
- Fig. 3: eine schematische Darstellung zweier erfindungsgemässer Filtrationseinheiten in
- (a): paralleler Anordnung; und
- (b): serieller Anordnung, wobei hier innerhalb der Filtrationseinheit eine Mehrfachumlenkung erfolgt.

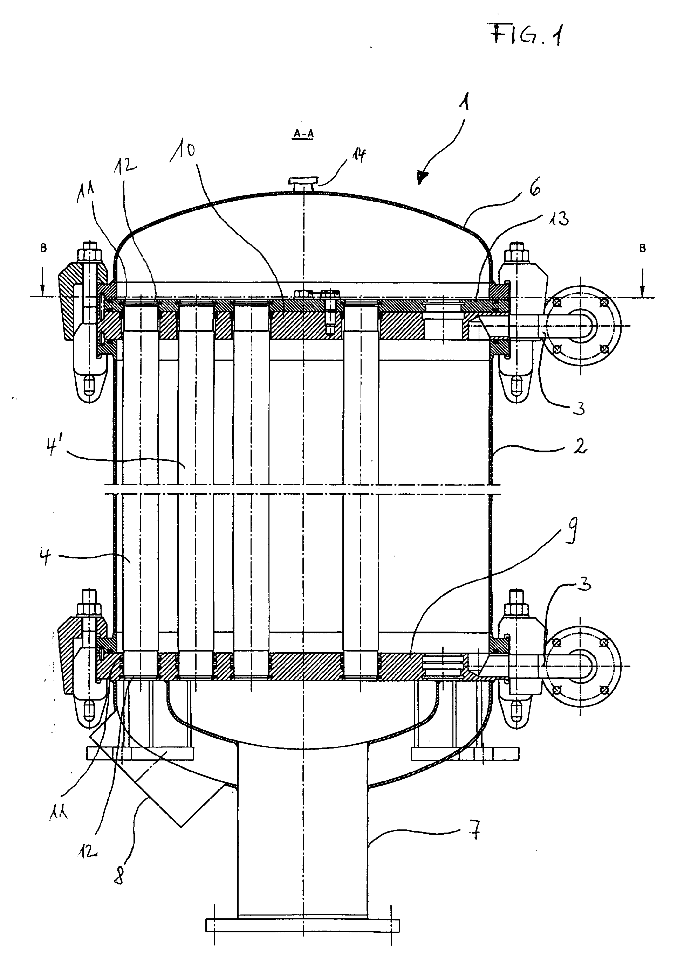

Ein Ausführungsbeispiel der erfindungsgemässen Filtrationseinheit zeigt Fig. 1. Das Filtergehäuse 2 bildet zusammen mit den Filterelementen 4, 4' und den Fassungselementen 9, 10 einen abgeschlossenen Raum zur Ableitung des Filtrats. Geeignete Materialien für das Filtergehäuse 2 sind sowohl rostfreier Edelstahl wie auch Normalstahl mit einer entsprechenden Kunststoffbeschichtung. Einzelne Elemente des Filtergehäuses 2 können auch in Kunststoff ausgeführt sein. Die Filtratauslassöffnungen dienen gleichzeitig auch zur Entlüftung 14 bzw. zur Entleerung des Filtratraumes. Das Filtrat wird mindestens durch eine der Filtratauslassöffnungen 3 abgeführt. Filtratauslauföffnung dient gleichzeitig auch zur Entlüftung respektive Entleerung des Filtratraumes. Durch die Zuleitung 7 wird das Unfiltrat in die Filtrationseinheit 1 geleitet. Die Zuleitung 7 weist einen genormten Flansch auf, der eine einfache Installation an eine Vorrichtung zur Filtration erlaubt. Von der Zuleitung 7 wird das Unfiltrat in die Filterelemente 4' geführt. In den keramischen Filterelementen 4' werden die Trübungsstoffe des Unfiltrat durch die Filterwirkung des porösen Keramikmaterials an der Oberfläche zurückgehalten und durch nachfliessendes Unfiltrat kontinuierlich entfernt. Nach dem Durchströmen der keramischen Filterelemente 4' tritt das Unfiltrat auf der der Zuleitung entgegengesetzten Seite aus und wird durch das Mittel zur Umkehrung 6 in die keramischen Filterelemente 4 gelenkt. Das Umkehrungsmittel 6 kann in verschiedensten Ausführungsformen eingesetzt werden. So können beispielsweise gekrümmte Prallflächen oder Leitwände in dieses Umkehrungsmittel integriert sein. Ebenfalls kann an diesen Umkehrungsmitteln eine dichtend verschliessbare Entlüftungsöffnung angebracht sein. Nach dem Strömen des Unfiltrats durch das keramische Filterelement 4 und der darin stattfindenden Filtrationsvorgänge wird das verbleibende Unfiltrat durch die Ableitung 8 aus der Filtrationseinheit geführt. Die Ableitung 8 kann ebenfalls einen genormten Flansch aufweisen, der eine einfache Installation an eine Filtrationsvorrichtung ermöglicht. Das Unfiltrat kann jedoch auch durch die Ableitung 8 in die Filtrationseinheit und durch die Zuleitung 7 aus der Filtrationseinheit geführt werden.

Die Filterelemente, wie sie beispielsweise durch die Firma aaflowsystems vertrieben werden, bestehen aus einem grob porösen Trägerkörper auf den eine oder mehrere Zwischenschichten aufgebracht sind. Als letzte Schicht wird eine Trennschicht mit genau definierten Porengrössen appliziert. Als Material für den Trägerkörper sowie die Zwischen- und Trennschichten finden Aluminiumoxid, Titanoxid, Zirkonoxid und nicht oxidische Hartstoffe Verwendung.

Die Filterelemente 4, 4' in Form von Keramikstäben sind wie im Folgenden beschrieben im Filtergehäuse 2 gefasst. Die Keramikstäbe werden von oben durch das obere Fassungselement 10 eingeschoben. Die Bohrungen in dem oberen Fassungselement 10 sind daher grösser als der maximale Aussendurchmesser der Keramikstäbe. In dem unteren Fassungselement 9 sind die Bohrungen dem angeschliffenen Durchmesser der Keramikstabenden angepasst. Die Dichtung in dem unteren Fassungselement 9 erfolgt mit einer standardmässigen doppelten O-Ring-Abdichtung 11. Im oberen Fassungselement 10 erfolgt die Abdichtung mittels eines durch eine Klemmplatte 13 zusammengequetschen O-Ringes 11. Hierdurch wird zugleich eine Dichtung zwischen dem oberen Fassungselement 10 und der Klemmplatte 13 erzielt. Das Zusammenquetschen der Dichtung erhöht zudem auch die radiale Kraft auf den Keramikstab (Filterelement 4, 4') und verhindert ein leichtgängiges Bewegen des Filterelementes 4, 4' in axialer Richtung, wie es insbesondere beim Anfahren der Anlage möglich sein kann. Ein Verschieben der Filterelemente 4, 4' in Längsrichtung wird durch beidseitige Endanschläge 12 begrenzt. Zum Schutze der Aufschlag empfindlichen Kanten der Keramikstäbe (Filterelemente 4, 4') sind die Endanschläge mit einer Gummidichtung gedämpft. Entsprechend dem jeweiligen Einsatzbereich sind die Dichtungen aus Acrylnitril-Butadien-Kautschuk (NBR), Ethylen-Propylen-Kautschuk (EPDM), Fluor-Kautschuk (FKM), Chlorbutadien-Kautschuk (CR), Styrol-Butadien-Kautschuk (SBR), Silikon-Kautschuk (VMQ), Fluorsilikon-Kautschuk (FVMQ) oder Viton ausgeführt.

Die Zuleitung 7 und die Ableitung 8 können allerdings auch so ausgeführt sein, dass eine restlose Entleerung der unteren Kammer bzw. der Zuleitung oder Ableitung gewährleistet werden kann.

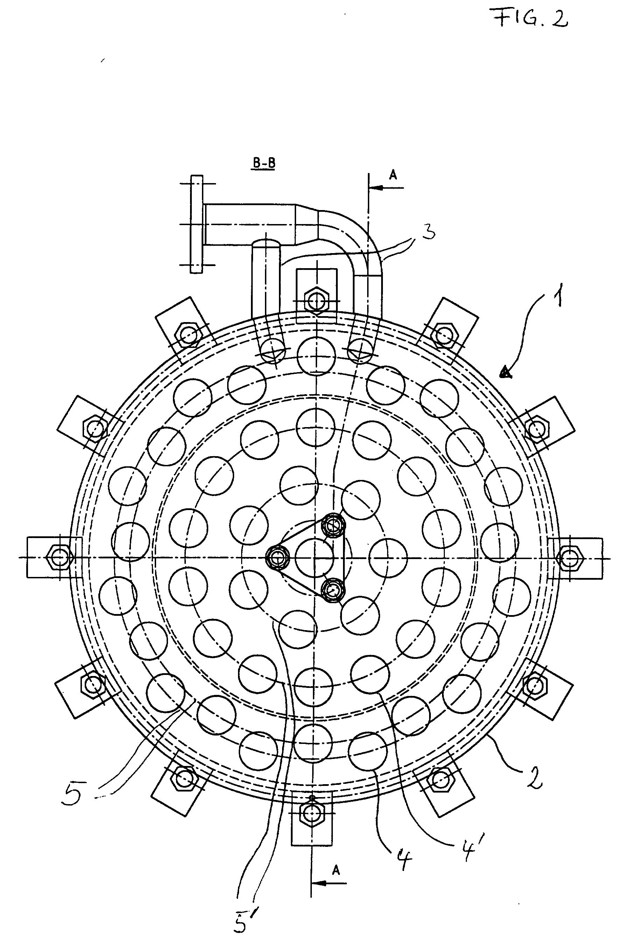

Ein Querschnitt durch eine beispielhafte Filtrationseinheit 1, wie sie Fig. 2 zeigt, verdeutlicht den Vorteil einer geordneten Anordnung der Filterelemente 4, 4'. Die geradzahlige Anzahl von Filterelementen 4, 4' wird in zwei Gruppen 5, 5' mit jeweils gleicher Anzahl an Filterelemente 4, 4' aufgeteilt. Wie aus der Fig. 2 zu erkennen ist, sind die Filterelemente 4, 4' in der beschreibenden Ausführungsform auf jeweils konzentrischen Kreisen um den Mittelpunkt der Filtrationseinheit 1 angeordnet. Es sind auch andere geeignete Anordnungen wie beispielsweise eine jeweils hälftige Anordnung möglich. Deutlich erkennbar bilden die Filterelemente 4' auf den beiden inneren Anordnungskreisen die Gruppe 5'. Analog finden sich die Filterelemente 4 auf den beiden äusseren Anordnungsringen und bilden die zweite Gruppe 5.

Diese Art und Weise der Anordnung ermöglicht eine einfache Anschliessung der Zuleitung 7 bzw. der Ableitung 8 an das Filtergehäuse 2. Das aufgrund der Filterwirkung der porösen keramischen Filterelemente 4, 4' gebildete Filtrat wird durch die Filtratauslassöffnungen 3 aus dem Filtergehäuse 2 herausgeführt.

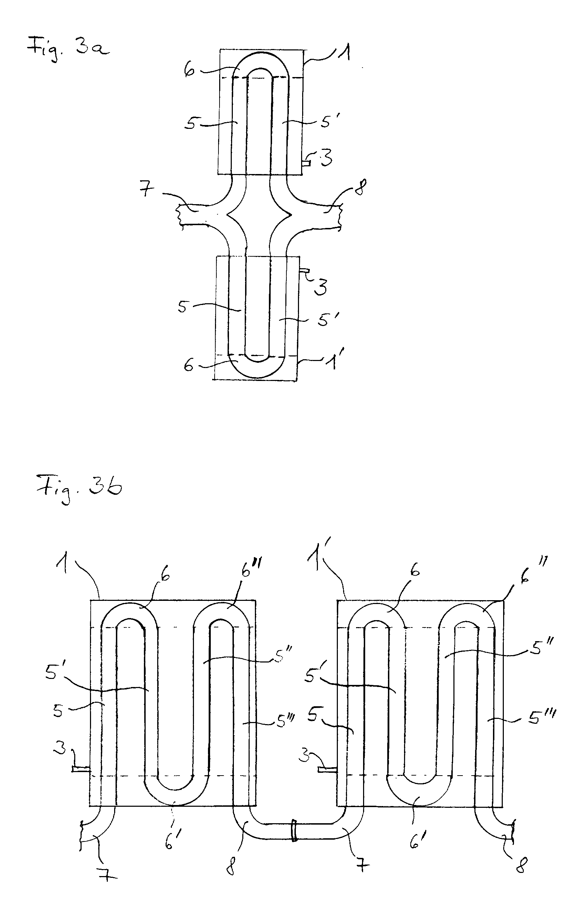

Die Möglichkeit einer parallelen Anordnung zweier erfindungsgemässen Filtrationseinheiten 1, 1' zeigt Figur 3a. Beide Filtrationseinheiten 1, 1' werden über eine gemeinsame Zuleitung 7 für das Unfiltrat angeschlossen. Nach dem Durchströmen einer ersten Gruppe 5 von Filterelementen wird der Unfiltratstrom im Innern der Filtrationseinheiten 1 bzw. 1' durch die Umkehrung 6 in seiner Richtung umgelenkt und fliesst durch eine zweite Gruppe 5' von Filterelementen. Das verbleibende Unfiltrat wird aus der jeweiligen Filtrationseinheit 1, 1' in der gemeinsamen Ableitung 8 zusammengeführt und kann einer weiteren Filtration unterworfen werden. Das gewonnene Filtrat wird aus den Filtrationseinheiten 1, 1' über den Filtratauslass 3 entnommen.

Eine weitere Möglichkeit zur Anordnung von erfindungsgemässen Filtrationseinheit 1, 1' ist schematisch in Figur 3b dargestellt. In dieser Ausführungsform sind die Filtrationseinheiten 1, 1' in Serie angeordnet. Zusätzlich ist in der Figur 3b die Filtrationseinheit 1, 1' so ausgestaltet, dass der Unfiltratstrom innerhalb der Filtrationseinheit 1, 1' mehrfach umgelenkt wird. Das Unfiltrat wird durch die Zuleitung 7 in die Filtrationseinheit 1 geleitet, durchfliesst die erste Gruppe 5 von Filterelementen und wird durch die Umkehrung 6 in die zweite Gruppe 5' von Filterelementen gelenkt. Durch die Umkehrung 6' wird das Unfiltrat wiederum umgelenkt und durchströmt eine dritte Gruppe 5'' von Filterelementen. Die Fliessrichtung des Unfiltrats innerhalb der dritten Gruppen 5'' von Filterelementen ist identisch mit der Fliessrichtung innerhalb der erste Gruppe 5. Aufgrund der Umkehrung 6'' wird das Unfiltrat aus der dritten Gruppe 5'' in die vierte Gruppe 5''' von Filterelementen umgelenkt. Damit ist die Fliessrichtung des Unfiltrats innerhalb der vierten Gruppen 5''' von Filterelementen wiederum identisch mit der Fliessrichtung innerhalb der zweiten Gruppe 5'. Nach der vierten Gruppe 5''' von Filterelementen wird das verbleibende Unfiltrat aus der Filtrationseinheit 1 durch die Ableitung 8 weggeführt und gelangt über die entsprechende Zuleitung 7 in die Filtrationseinheit 1'. Die Filtrationseinheit 1' ist analog der Filtrationseinheit 1 aufgebaut. Das gewonnene Filtrat wird aus den Filtrationseinheiten 1, 1' über den Filtratauslass 3 entnommen. Selbstverständlich können auch mehr als zwei solcher Filtrationseinheiten 1, 1' in Serie angeordnet werden.

## Patentansprüche

**1.** Filtrationseinheit (1) zur Crossflow-Filtration von Flüssigkeiten enthaltend ein Filtergehäuse (2) zum Ableiten von Filtrat, welches Filtergehäuse (2) wenigstens zwei rohrförmige, keramische Filterelemente (4, 4') zur Durchleitung des Unfiltrats enthält, **dadurch gekennzeichnet, dass** die Filterelemente (4, 4') in wenigstens zwei Gruppen (5, 5') angeordnet sind und dass die Filterelemente (4, 4') jeder Gruppe derart mit einer Anordnung zum Leiten des Unfiltrats verbunden sind, dass das Unfiltrat in der ersten Gruppe (5) von Filterelementen (4) in einer Strömungsrichtung und in der zweiten Gruppe (5') in der entgegengesetzten Richtung strömt.

**2.** Filtrationseinheit (1) nach Anspruch 1, **dadurch gekennzeichnet, dass** das Unfiltrat auf einer Seite des Filtergehäuses (2) zugeleitet und auf derselben Seite abgeleitet wird.

**3.** Filtrationseinheit (1) nach einem der Ansprüche 1 oder 2, **dadurch gekennzeichnet, dass** eine Zuleitung (7) die erste Gruppe (5') der Filterelemente (4') des Filtergehäuses anschliesst und dass eine Ableitung (8) die andere Gruppe (5) der Filterelemente (4) des Filtergehäuses (2) anschliesst.

**4.** Filtrationseinheit (1) nach einem der Ansprüche 1 bis 3, **dadurch gekennzeichnet, dass** die Zuleitung (7) und die Ableitung (8) des Unfiltrat gegeneinander abgedichtet an das Filtergehäuse (2) des Filtrationseinheit (1) angeflanscht sind.

**5.** Filtrationseinheit (1) nach einem der Ansprüche 1 bis 4, **dadurch gekennzeichnet, dass** die keramischen Filterelemente (4, 4') wenigstens einer Gruppe (5, 5') unmittelbar parallel nebeneinander angeordnet sind.

**6.** Filtrationseinheit (1) nach einem der Ansprüche 1 bis 5, **dadurch gekennzeichnet, dass** das Filtergehäuse (2) eine grössere geradzahlige Anzahl als zwei an Gruppen (5, 5') von keramischen Filterelementen (4, 4') enthält.

**7.** Filtrationseinheit (1) nach einem der Ansprüche 1 bis 6, **dadurch gekennzeichnet, dass** die der Zuleitung (7) und Ableitung (8) gegenüberliegenden Seite des Filtergehäuses (2) mindestens ein Mittel zur Umkehrung (6) der Durchflussrichtung des Unfiltrats enthält.

**8.** Filtrationseinheit (1) nach einem der Ansprüche 6 oder 7, **dadurch gekennzeichnet, dass** auf der Seite der Zuleitung (7) und Ableitung (8) zusätzlich mindestens ein Mittel zur Umkehrung der Durchflussrichtung angeordnet ist.

**9.** Filtrationseinheit (1) nach einem der Ansprüche 1 bis 8, **dadurch gekennzeichnet, dass** das Mittel zur Umkehrung der Durchflussrichtung und/oder die Zuleitung (7) und/oder die Ableitung (8) des Unfiltrats fest mit dem Gehäuse (2) verbunden sind.

**10.** Filtrationseinheit (1) nach einem der Ansprüche 1 bis 9, **dadurch gekennzeichnet, dass** das Filtergehäuse (2) mindestens eine Filtratauslassöffnung (3) aufweist.

**11.** Vorrichtung zur Filtration von Flüssigkeiten enthaltend mindestens eine Filtrationseinheit (1) nach einem der Ansprüche 1 bis 10 und wenigstens eine Pumpe zum Pumpen des Unfiltrats durch die Filtrationseinheit (1).

**12.** Verfahren zur Filtration von Flüssigkeiten in einer Filtrationseinheit (1) nach einem der Ansprüche 1 bis 10, **gekennzeichnet durch** die Schritte:
a) Zuführung des Unfiltrat **durch** ein Zuleitungselement (7) zu einem Filtergehäuse mit wenigstens zwei Filterelementen (4, 4') ;
b) Durchführung des Unfiltrats **durch** mindestens eine Gruppe (5, 5') von Filterelementen (4, 4');
c) Umkehrung der Fliessrichtung des Unfiltrats mit mindestens einem Mittel zur Umkehrung (6) der Fliessrichtung;
d) Durchführung des Unfiltrats **durch** die zweite Gruppe (5, 5') von Filterelementen (4, 4'), die nicht für Schritt b) eingesetzt werden, mit einer der Fliessrichtung des Schrittes b) entgegengesetzten Fliessrichtung; und
e) Ausleitung des nicht filtrierten Unfiltrat **durch** eine Ableitung (8) mit einer von der Zuleitung (7) flüssigkeitsdicht abgetrennten Flüssigkeitsführung.

**12.** Verfahren zur Filtration von Flüssigkeiten nach Anspruch 11, **dadurch gekennzeichnet, dass** mehrere Filtrationseinheiten (1) seriell oder parallel angeordnet sind.

**13.** Verfahren zur Filtration von Flüssigkeiten nach einem der Ansprüche 11 oder 12, **dadurch gekennzeichnet, dass** das Unfiltrat nach dem Schritt d) wenigstens einer weiteren Schrittfolge c), b), c) und d) durch wenigstens zwei weitere Gruppen (5, 5') von Filterelementen (4, 4') innerhalb der Filtrationseinheit (1) geführt wird.

**14.** Verfahren zur Filtration von Flüssigkeiten nach einem der Ansprüche 11 bis 13, **dadurch gekennzeichnet, dass** das Unfiltrat durch die Ableitung (7) zugeführt wird und durch die Zuleitung (7) abgeführt wird.
